# EUROPEAN PATENT APPLICATION

(11) **EP 3 712 747 A1**
(43) Date of publication of application: **23.09.2020**
(21) Application number: 19163886.5
(22) Date of filing: 19.03.2019
(51) Int. Cl.: G06F 3/01

(54) **INDICATOR MODES**

(71) Applicant: Nokia Technologies Oy, 02610 Espoo (FI)
(72) Inventor: ERONEN, Antti Johannes, 33820 Tampere (FI); LEPPÄNEN, Jussi Artturi, 33580 Tampere (FI); LEHTINIEMI, Arto Juhani, 33880 Lempäälä (FI); VILERMO, Miikka Tapani, 37200 Siuro (FI)
(74) Representative: Whiting, Gary

(57) **Abstract**

An apparatus, method and computer program is described comprising: determining a target in a virtual scene; determining a user context with respect to the target; selecting one or more indicator modes of a user guidance based on at least the target and the user context; and guiding the user towards the target using the selected one or more indicators of the user guidance.

## Description

### Field

The present specification relates to virtual scenes, such a virtual reality, augmented reality, or mixed reality scenes.

### Background

Arrangements for enhancing the experience of a user in a virtual scene are known. However, there remains a need for further developments in this field.

### Summary

In a first aspect, this specification provides an apparatus comprising: means for determining a target in a virtual scene (e.g. receiving, obtaining or calculating a target in a virtual scene); means for determining a user context with respect to the target; means for selecting one or more indicator modes of a user guidance based on at least the target and the user context; and means for guiding the user towards the target using the selected one or more indicator modes of the user guidance.

The means for selecting the one or more indicator modes may select said modes, at least in part, to cause minimum interference to the user's interaction with the target. The relevant user interaction may include enjoying or perceiving the target (such as hearing or seeing the target) or communicating with the target.

Some embodiments comprise determining a variable related to the nature of the target, wherein the selection of the one or more indicator modes is further based on said variable. The nature of the target may include the importance of the audible or visual nature of the target.

The user context may comprise information regarding the user's current position in the scene. Alternatively, or in addition, the user context may comprise information regarding whether or the extent to which the target is within the user's visual range (e.g. whether the user can see the target). Alternatively, or in addition, the user context may comprise whether or the extent to which the target is within the user's audible range (e.g. whether the user can hear the target).

The target may comprise one or more associated audible objects. The target may comprise one or more associated visual objects. The target may comprise one or more associated audible and visual objects. The target may be within the user's visual range when the user is able to see at least one of the one or more associated visual objects. The target may be within the user's audible range when the user is able to hear at least one of the one or more associated audible objects.

The one or more indicator modes may comprise at least one of: an audio indicator; a visual indicator; or a haptic indicator. The apparatus may further comprise means for stopping use of the audio indicator for user guidance when the target is within the user's audible range. Alternatively, or in addition, the apparatus may further comprise means for stopping use of the visual indicator for user guidance when the target is within the user's visual range. Alternatively, or in addition, the apparatus may further comprise means for starting use of the haptic indicator for user guidance when the use of the audio indicator and/or the use of the visual indicator is stopped.

In some embodiments, the apparatus further comprises means for synchronizing pulses or pulse rates of indicator modes when transitioning from one indicator mode to another indicator mode.

In some embodiments, the apparatus may further comprise stopping the use of indicators for user guidance when the target is within the user's audible range and within the user's visual range. Alternatively, or in addition, the apparatus may further comprise fading out any indicator mode that is stopping (if any) and fading in any indicator mode that is starting (if any).

The said scene may, for example, be an extended reality, virtual reality, augmented reality or mixed reality scene.

The said means may comprise: at least one processor; and at least one memory including computer program code, the at least one memory and the computer program code configured, with the at least one processor, to cause the performance of the apparatus.

In a second aspect, this specification describes a method comprising: determining a target in a virtual scene; determining a user context with respect to the target; selecting one or more indicator modes of a user guidance based on at least the target and the user context; and guiding the user towards the target using the selected one or more indicators of the user guidance.

Selecting the one or more indicator modes may comprise selecting said modes, at least in part, to cause minimum interference to the user's interaction with the target.

Some embodiments comprise determining a variable related to the nature of the target, wherein the selection of the one or more indicator modes is further based on said variable. The nature of the target may include the importance of the audible or visual nature of the target.

The one or more indicator modes may comprise at least one of: an audio indicator; a visual indicator; or a haptic indicator. Some embodiments comprise stopping use of the audio indicator for user guidance when the target is within the user's audible range. Alternatively, or in addition, some embodiments comprise stopping use of the visual indicator for user guidance when the target is within the user's visual range. Alternatively, or in addition, some embodiments comprise starting use of the haptic indicator for user guidance when the use of the audio indicator and/or the use of the visual indicator is stopped.

Some embodiments comprise synchronizing pulses or pulse rates of indicator modes when transitioning from one indicator mode to another indicator mode.

Some embodiments comprise stopping the use of indicators for user guidance when the target is within the user's audible range and within the user's visual range. Alternatively, or in addition, some embodiments comprise fading out any indicator mode that is stopping (if any) and fading in any indicator mode that is starting (if any).

In a third aspect, this specification describes any apparatus configured to perform any method as described with reference to the second aspect.

In a fourth aspect, this specification describes computer-readable instructions which, when executed by computing apparatus, cause the computing apparatus to perform any method as described with reference to the second aspect.

In a fifth aspect, this specification describes a computer program comprising instructions for causing an apparatus to perform at least the following: determine a target in a virtual scene; determine a user context with respect to the target; select one or more indicator modes of a user guidance based on at least the target and the user context; and guide the user towards the target using the selected one or more indicators of the user guidance.

In a sixth aspect, this specification describes a computer-readable medium (such as a non-transitory computer readable medium) comprising program instructions stored thereon for performing at least the following: determining a target in a virtual scene; determining a user context with respect to the target; selecting one or more indicator modes of a user guidance based on at least the target and the user context; and guiding the user towards the target using the selected one or more indicators of the user guidance.

In a seventh aspect, this specification describes an apparatus comprising: at least one processor; and at least one memory including computer program code which, when executed by the at least one processor, causes the apparatus to: determine a target in a virtual scene; determine a user context with respect to the target; select one or more indicator modes of a user guidance based on at least the target and the user context; and guide the user towards the target using the selected one or more indicators of the user guidance.

In an eighth aspect, this specification describes an apparatus comprising: a first control module for determining a target in a virtual scene (e.g. receiving, obtaining or calculating a target in a virtual scene); a second control module for determining a user context with respect to the target; a mode selection module for selecting one or more indicator modes of a user guidance based on at least the target and the user context; and a guidance module for guiding the user towards the target using the selected one or more indicator modes of the user guidance. At least some of said modules may be implemented by the same control or processing module.

### Brief description of the drawings

Example embodiments will now be described, by way of non-limiting examples, with reference to the following schematic drawings, in which:
FIG. 1 is a representation of a virtual scene in accordance with an example embodiment;
FIG. 2 shows a virtual reality or augmented reality headset;
FIG. 3 is a block diagram of a system in accordance with an example embodiment;
FIG. 4 is a flow chart showing an algorithm in accordance with an example embodiment;
FIGS. 5 to 9 are representations of scenes in accordance with example embodiments;
FIG. 10 is a flow chart showing an algorithm in accordance with an example embodiment;
FIG. 11 is a block diagram in accordance with an example embodiment; and
FIGS. 12A and 12B show tangible media, respectively a removable memory unit and a compact disc (CD) storing computer-readable code which when run by a computer perform operations according to embodiments.

### Detailed description

In the description and drawings, like reference numerals refer to like elements throughout.

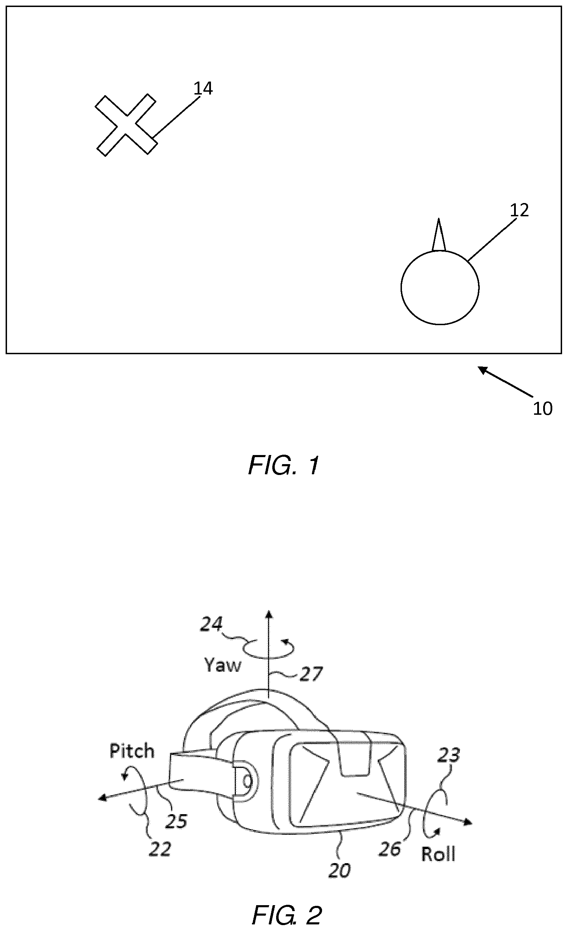

FIG. 1 is a representation of a virtual scene, indicated generally by the reference numeral 10, in accordance with an example embodiment. The scene 10 comprises a user 12 and a target 14. In an example, the user 12 may move around the scene 10, and may want to reach the target 14. The user 12 may be guided towards the target 14 by a user guidance apparatus. The scene 10 maybe a virtual reality scene.

The term "virtual reality" may be used in the specification herein to represent virtual reality, extended reality, augmented reality, and/or mixed reality.

Extended reality (XR) is a term that refers to all real-and-virtual combined environments and human-machine interactions generated by digital technology and various wearables. It includes representative forms such as augmented reality (AR), augmented virtuality (AV), mixed reality (MR), and virtual reality (VR) and any relevant interpolations.

Virtual reality (VR) can generally be understood as a rendered version of visual and audio scene. The rendering is typically designed to closely mimic the visual and audio sensory stimuli of the real world in order to provide a user a natural experience that is at least significantly consistent with their movement within virtual scene according to the limits defined by the content and/or application.

VR in most cases, but not necessarily all cases, requires a user to wear a head mounted display (HMD), to completely replace the user's field of view with a simulated visual presentation, and to wear headphones, to provide the user the simulated audio content similarly completely replacing the sound scene of the physical space. Some form of head tracking and general motion tracking of the user consuming VR content is typically also necessary. This allows the simulated visual and audio presentation to be updated in order to ensure that, from the user's perspective, various scene components such as items and sound sources remain consistent with the user's movements. Additional means to interact with the virtual reality simulation, such as controls or other user interfaces (UI) may be provided but are not strictly necessary for providing the experience.

VR can in some use cases be visual-only or audio-only virtual reality. For example, an audio-only VR experience may relate to a new type of music listening or any other audio experience.

Augmented reality (AR) refers to providing user with additional information or artificially generated items or content that is at least significantly overlaid upon the user's current real-world environment stimuli. In some such cases, the augmented content may at least partly replace a real-world content for the user. Additional information or content will usually be visual and/or audible. Similarly to VR, but potentially in more applications and use cases, AR may have visual-only or audio-only presentation. For example, user may move about a city and receive audio guidance relating to, e.g., navigation, location-based advertisements, and any other location-based information.

Mixed reality (MR) is often considered as a more advanced form of AR where at least some virtual elements are inserted into the physical scene such that they provide the illusion that these elements are part of the real scene and behave accordingly. For audio content, or indeed audio-only use cases, many applications of AR and MR may appear difficult for the user to tell from one another. However, the difference is not only for visual content but it may be relevant also for audio. For example, MR audio rendering may take into account a local room reverberation, e.g., while AR audio rendering may not.

FIG. 2 shows a headset 20, for displaying visual data for a virtual reality or augmented reality space. The headset 20 may comprise augmented reality (AR) glasses, which may enable visual content, for example one or more virtual objects, to be projected or displayed on top of a see-through portion of the glasses.

The headset 20 receives the virtual reality or augmented reality content data, for example from a media player (not shown). Here, the media player may comprise a mobile phone, smartphone or tablet computer configured to play content through its display. For example, the media player may be a touchscreen device having a large display over a major surface of the device, through which video content can be displayed. The media player may be inserted into a holder of a headset 20. With such headsets 20, a smart phone or tablet computer may display visual data which is provided to a user's eyes via respective lenses in the headset 20. The visual data may be provided as a stereoscopic display where the two slightly different angles of the visual scene are displayed to each eye.

The headset 20 may include means for determining the spatial position of the user and/or orientation of the user's head. This may be by means of determining the spatial position and/or orientation of the headset 20. Over successive time frames, a measure of movement may therefore be calculated and stored. For example, the headset 20 may incorporate motion tracking sensors which may include one or more of gyroscopes, accelerometers and structured light systems. These sensors may generate position data from which a current visual field-of-view (FOV) is determined and updated as the user, and so the headset 20, changes position and/or orientation. The headset 20 may comprise two digital screens for displaying stereoscopic video images of the virtual world in front of respective eyes of the user, and also two speakers for delivering audio, if provided. The example embodiments herein are not limited to a particular type of headset 20.

In some example embodiments, the spatial position and/or orientation of the user's head may be determined using a six degrees of freedom (6DoF) method. As shown in FIG. 2, these include measurements of pitch 22, roll 23 and yaw 24 and also translational movement in Euclidean space along side-to-side, front-to-back and up- and-down axes 25, 26 and 27. (The use of a six-degrees of freedom headset is not essential. For example, a three-degrees of freedom headset could readily be used.)

The headset 20 may be configured to display virtual reality or augmented reality content data to the user based on spatial position and/or the orientation of the headset 20. A detected change in spatial position and/or orientation, i.e. a form of movement, may result in a corresponding change in the visual data to reflect a position or orientation transformation of the user with reference to the space into which the visual data is projected. This allows virtual reality content data to be consumed with the user experiencing a 3D virtual reality or augmented reality environment.

Correspondingly, the detected change in spatial position and/or orientation may result in a corresponding change in the audio data played to the user to reflect a position or orientation transformation of the user with reference to the space where audio data is located. Modifications such as level and position changes are done to audio playback properties of sound objects to correspond to the transformation. For example, when the user rotates his head the positions of sound objects are rotated accordingly to the opposite direction so that, from the perspective of the user, the sound objects appear to remain at a constant position in the virtual world. As another example, when the user walks farther away from an audio object, its gain or amplitude may be lowered accordingly inversely proportionally to the distance as would approximately happen in the real world when user walks away from a real, physical sound emitting object.

User interaction in virtual reality, augmented reality, or mixed reality environments can be cumbersome. Interaction, for example pressing buttons or moving sliders, in typical virtual reality, augmented reality, or mixed reality environments requires the user to look at an interaction element and then perform the relevant interaction. Looking at an interaction element may be more difficult in virtual reality environments compared to the real world because of technical limitations of virtual reality experiencing devices, for example. Atypical example is the limited field of view (FOV) of head mounted displays (HMD) which makes it more difficult to visually locate an object. The interaction may, for example, be performed using a controller or a gesture. In some scenarios, the user might not be looking at the interaction element, despite wanting to perform an interaction.

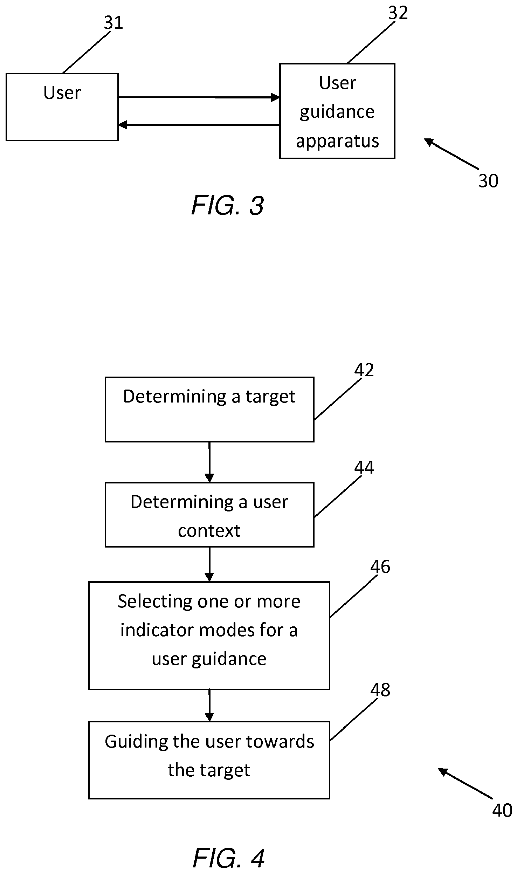

FIG. 3 is a block diagram of a system, indicated generally by the reference numeral 30, in accordance with an example embodiment. A user 31 (such as the user 12 described above) may interact with a user guidance apparatus 32, and the user 31 may be guided by the user guidance apparatus 32. The user guidance apparatus 32 may be a virtual reality apparatus, augmented reality apparatus, and/or mixed reality apparatus. The user 31 may interact with one or more objects or targets in the virtual reality scene. In the context of the scene 10 described above, the user 12 may be guided to the target 14 by the user guidance apparatus 32.

FIG. 4 is a flow chart showing an algorithm, indicated generally by the reference numeral 40, in accordance with an example embodiment.

At operation 42, a target (such as the target 14) is determined in a virtual scene (such as the scene 10). For example, the virtual scene maybe set such that the user is required to reach the target. The target maybe determined based on the scene (for example, based on a game specification, or based on criteria for making the user experience enjoyable). The user guidance apparatus 32 provides guidance to the user 12 or 31 to reach the target (such as the target 14). This can be done with one or more of visual indicator(s), audible indicator(s), a haptic indicator(s), or any other form of indicator(s). The target may comprise one or more associated objects, where the objects maybe audible objects and/or visual objects. For example, if the target is a singing person, the target is both a visual object and an audible object. Alternatively, if a target is a singing vocalist of a musical band, visual objects associated with the target may include the target and the band members, and the visual objects associated with the target may include the target (hearing the song of the vocalist), and also the band members (hearing the music played by each band member). The scene may be such that the user may not be able to see the target or hear the target and/or associated objects from the user's current position, and therefore may need user guidance to reach the target.

At operation 44, a user context is determined with respect to the target. The user context may, for example, comprise one or more of: information of the user's current position in the scene; whether, or the extent to which, the target is within the user's visual range; and whether, or the extent to which, the target is within the user's audible range. By way of example, the target may be deemed to be within the user's visual range when the user is able to see at least one of one or more visual objects associated with the target. Alternatively, or in addition, the target may be deemed to be within the user's audible range when the user is able to hear at least one of one or more audible objects associated with the target.

At operation 46, one or more indicator modes are selected for a user guidance based on at least the determined target and the user context. Example indicator modes include visual, audible and haptic indicator modes. For example, when the user is at a position when the target or any associated objects cannot be seen (not within the user's visual range), and also cannot be heard (not within the user's audible range), both visual and audible indicators may be used to help the user reach the target. However, if an audible indicator is used when the user can hear the target and/or associated objects (i.e. is within the user's audible range), the audible indicators may interfere with the user's interaction with the target. The user's interaction may include the user's experience of hearing and/or visualizing the target or the user's perception of the audio outputs and/or views of the target and/or associated objects. Such interference may be undesirable. Thus, the one or more indicator modes maybe selected, at least in part, to cause minimum interference to the user's interaction with the target, for example by selecting the indicator mode that interferes with the user's interaction least. An algorithm may be provided for determining which of multiple available interaction mode combinations interferes with the user's interaction least.

At operation 48, the user is guided towards the target using the selected one or more indicator modes. In a visual indicator mode, the user may, for example, be guided by a visual indicator such as a text message, a sign, a light, flashing light, or any other visual indicator that can be perceived visually (seen). In an audible indicator mode, the user may, for example, be guided by a voice message, a sound, a beeping sound, an earcon, or any other audible indicator that can be perceived audibly (heard). In a haptic indicator mode, the user may, for example, be guided by a vibration. Alternative visual, audible and haptic indicators will be apparent to those skilled in the art.

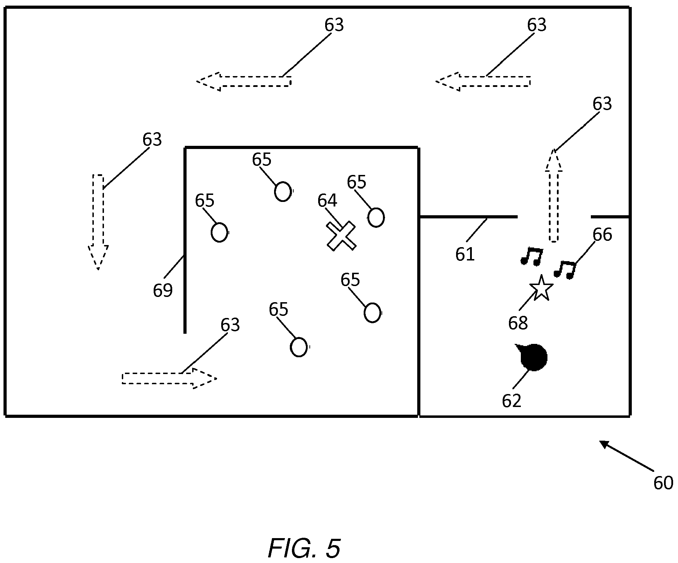

FIGS. 5 to 9 are example representations of scenes, indicated generally by the reference numerals 60, 70, 80, 90, and 100, respectively, in accordance with example embodiments. Scenes 60, 70, 80, 90, and 100 show how a user may be guided towards a target using one or more indicator modes. Scenes 60, 70, 80, 90, and 100 may be top views of a virtual reality scene.

Scene 60, as shown in FIG. 5, comprises a user 62, a target 64, and objects 65 associated with the target 64. Some or all of the associated objects 65 may be omitted in some embodiments. By way of example, the target 64 may be a singer in a band, with the objects 65 being the other band members. Of course, many other examples of targets and objects are possible.

As shown by dotted arrows, the user 62 may be directed to follow directions 63 in order to be able to reach the target 64 (e.g. in order to hear and/or view the target). In order to guide the user 62 along the direction 63, user guidance may be provided to the user with one or more indicator modes.

In the scene 60, a visual indicator 68 (in the form of a star provided in the virtual scene) and an audible indicator 66 (in the form of an audible output provided to the user) are provided for directing the user. A first current position of the user 62 is shown to be on a bottom side of a wall 61, and on a right side outside a room 69. The first current position may be used for determining a first user context. The first user context may further indicate that the target 64 is not within the visual range or the audible range of the user 62 when the user 62 is in the first current position.

Thus, in the scene 60, the target 64 is identified (operation 42 of the algorithm 40), a user context is determined indicating that the target is not within the visual or audible range of the user (operation 44 of the algorithm 40), an indicator mode comprising, in this example, both audible and visual indicators is selected (operation 46 of the algorithm 40) and the user 62 is guided along direction 63 towards the target (operation 48 of the algorithm 40).

By way of example, the audible indicator 66 and/or the visual indicator 68 may be pulsed indicators (e.g. the visual indicator may be flashing). The pulse indicators may have a pulse rate. The pulse rate of visual and audible indicators that are provided together may be synchronised. Alternatively, or in addition, the pulse rate may be dependent on the distance to the target.

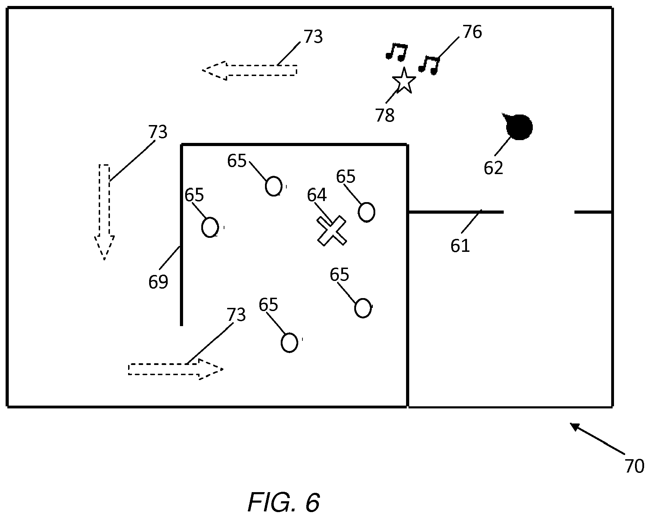

Scene 70, as shown in FIG. 6, shows that the user 62 has followed the directions 63 for a short distance, with the help of the user guidance. A second current position of the user 62 is shown to be on a top side of the wall 61, and on a right side outside the room 69. As shown by the dotted arrows, the user 62 may now need to follow directions 73 in order to be able to view and/or hear the target 64.

In the scene 70, the user guidance continues to provide a visual indicator 78 and an audible indicator 76. The visual indicator 78 and the audible indicator 76 may or may not be the same as the visual indicator 68 and the audible indicator 66 respectively described above. The second current position may be used for determining a second user context. The second user context may further indicate that the target 64 is not within the visual range or the audible range of the user 62 when the user 62 is in the second current position.

Thus, in the scene 70, the target 64 has been identified (operation 42 of the algorithm 40), a user context is determined indicating that the target is not within the visual or audible range of the user (operation 44 of the algorithm 40), an indicator mode comprising, in this example, both audible and visual indicators is selected (operation 46 of the algorithm 40) and the user is guided along direction 73 towards the target (operation 48 of the algorithm 40).

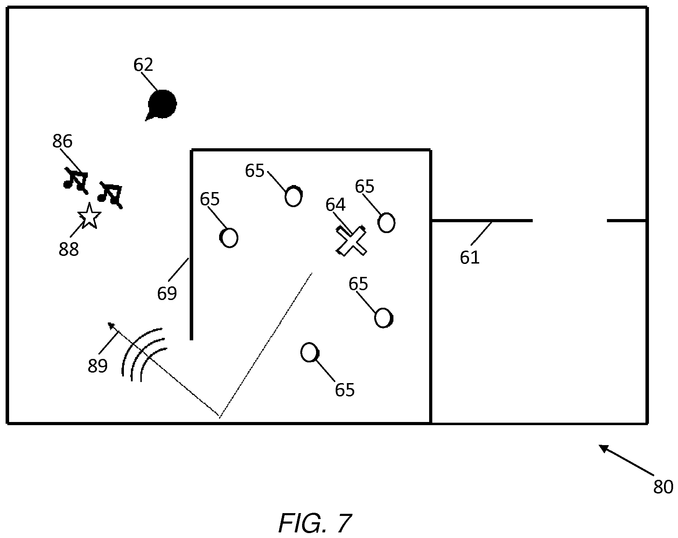

Scene 80, as shown in FIG. 7, shows that the user 62 has followed the direction 73 for a short distance, with the help of the user guidance. A third current position of the user 62 is shown to be on a top-left side outside the room 69. The third current position may be used for determining a third user context. The third user context may further indicate that the target 64 is within the audible range of the user 62 when the user 62 is in the third current position, as shown by a sound arrow 89.

In the scene 80, the target 64 has been identified (operation 42 of the algorithm 40). A user context is determined indicating that the target is not within the visual range of the user, but is within the audible range of the user (operation 44 of the algorithm 40). An indicator mode is selected (operation 46 of the algorithm 40) including, in this example, a visual indicator 88 (which may be similar to the visual indicators 68 and 78 described above) but omitting audible indicators (such that audible indicators 86 are not provided). The user is guided towards the target using the visual indicator 88 (operation 48 of the algorithm 40).

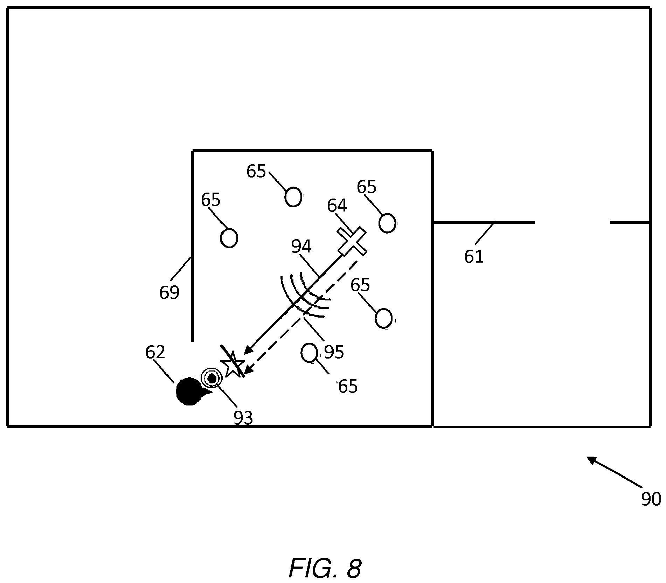

Scene 90, as shown in FIG. 8, shows that the user 62 has proceeded further towards target 64 with the help of the user guidance. A fourth current position of the user 62 is shown to be on a bottom-left side at an entrance of the room 69. The fourth current position may be used for determining a fourth user context. The fourth user context may further indicate that the target 64 is within the audible range of the user 62 when the user 62 is in the fourth current position, as shown by a sound arrow 94. The fourth user context may further indicate that the target 64 is also within the visual range of the user 62 when the user is in the fourth current position, as shown by the visual arrow 95.

In the scene 90, the target 64 has been identified (operation 42 of the algorithm 40). A user context is determined indicating that the target is within both the visual range of the user 62 and the audible range of the user (operation 44 of the algorithm 40). An indicator mode is selected (operation 46 of the algorithm 40) including, in this example, a haptic indicator 93 (omitting both the visual and audible indicators). The user is guided towards the target using the haptic indicator (operation 48 of the algorithm 40). The haptic indicator 93 may, for example, comprise a vibration.

Although guidance using a haptic indicator is described in the example scene 90, this is not essential to all embodiments. For example, in the event that the target is visible and audible, no guidance maybe provided at all. Alternatively, or in addition, there could be provided a threshold distance from the target at which point guidance is stopped.

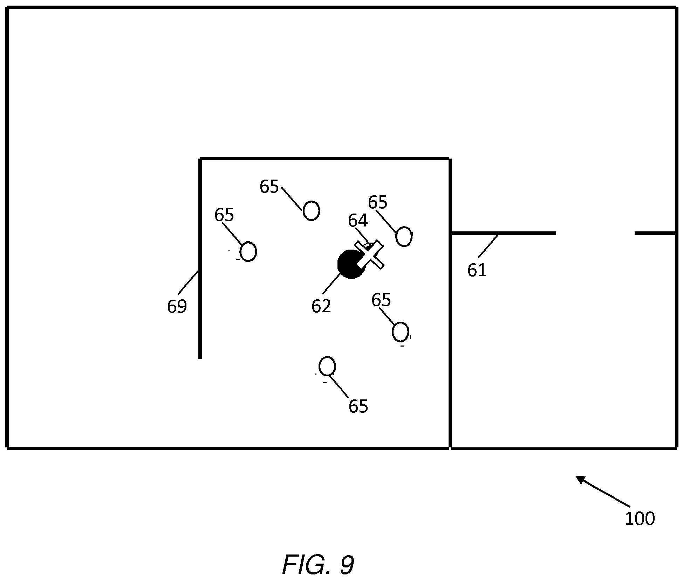

Scene 100, as shown in FIG. 9, shows that the user 62 has reached the target 64 with the help of the user guidance (for example with the use of the haptic indicator 93 described above). A fifth current position of the user 62 is shown to be inside the room 69 and together with the target 64. The fifth current position may be used for determining a fifth user context. The fifth user context may further indicate that the user 62 has reached the target 64, and therefore the user guidance (for example, all indicators) for guiding the user 62 towards the target 64 may be stopped.

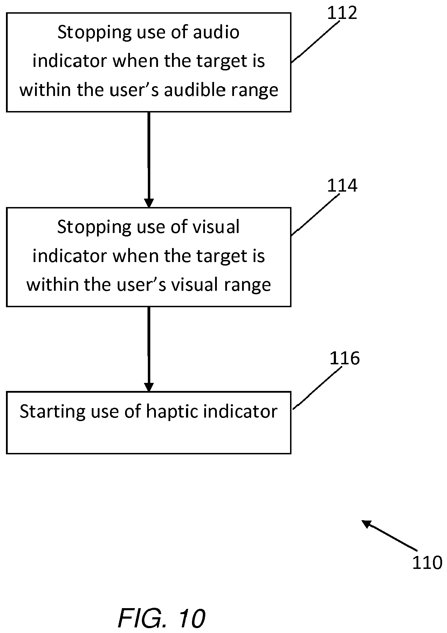

FIG. 10 is a flowchart of an algorithm, indicated generally by the reference numeral 110, in accordance with an example embodiment. Algorithm 110 shows an example of how indicator modes may be selected based on the user context (see operation 46 of the algorithm 40).

As discussed above, the operation 46 of the algorithm 40 selects one or more indicators modes for user guidance. Visual, audible and haptic indicator modes are described by way of example although, of course, other indicator modes could be used in addition to, or instead of, visual, audible and haptic indicator modes. Moreover, haptic modes may be used in many combinations.

Initially the user may be guided towards the target using visual and/or audible indicators.

At operation 112 of the algorithm 110, the use of an audio indicator may be stopped when the target is within the user's audible range. For example, when the user can hear the target (at least partially), stopping the use of the audio indicator may provide a better hearing experience to the user. This is discussed above, for example, with respect to the scene 80.

At operation 114 of the algorithm 110, the use of a visual indicator may be stopped when the target is within the user's visual range. For example, when the user can see the target (at least partially), stopping the use of the visual indicator may provide a better visual experience to the user (so that the visual indicator does not interfere with or block the view of the target). This is discussed above, for example, with respect to the scene 90.

At operation 116, the use of a haptic indicator is started when the use of the audio indicator and/or use of the visual indicator are stopped. This is discussed above, for example, with respect to the scene 90.

It should be noted that the algorithm 110 does not need to be implemented in the order shown in FIG. 10. For example, the operations 112 and 114 may be reversed. Moreover, some or all of the operation of the algorithm 110 may be carried out in parallel. Furthermore, at least some of the operations of the algorithm 110 may be omitted (e.g. the use of a haptic indicator may be omitted, as discussed above).

By way of example, in the scene 80 described above, the third user context indicates that the target 64 is within the audible range of the user 62 but is not within the visual range of the user. Thus, the use of the audible indicators 86 are stopped (operation 112 of the algorithm 110), but the user guidance continues to provide the visual indicator 88.

Similarly, in the scene 90, the fourth user context indicates that the target 64 is within both the audible range and the visual range of the user. Thus, both the audible and visual indicators are stopped (operations 112 and 114 of the algorithm 110) and the use of the haptic indicator is started (operation 116 of the algorithm 110).

In an example embodiment, pulses or pulse rates of the visual indicators and the audible indicators (as shown in scenes 60 and 70) may be synchronized. This may provide for a more comfortable user experience.

In another example embodiment, when there is a transition from one indicator mode to another (for example from a visual indicator 88 and/or an audible indicator to a haptic indicator 93), the pulses or the pulse rates of the haptic indicator may be synchronized with the pulses or pulse rates of the visual indicator and/or the audible indicator. This may provide for a more comfortable user experience during indicator mode transitions.

In a further example embodiment, during a transition from one indicator mode to another, any indicator mode that is ending may be faded out and any indicator mode that is starting may be faded in. Again, this may provide for a more comfortable user experience during indicator mode transitions. Such fading may be provided instead of, or in addition to, the pulse or pulse rate synchronization arrangement discussed above.

In an example embodiment, the indicator modes are selected based on a variable related to the nature of a target. The variable may indicate whether or the extent to which it is important to visualize the target or hear the target audibly. For example, if the target comprises a violin sound, it may be more important to hear the violin sound than to see the violin being played. Therefore, the indicator mode may be selected such that the hearing of the violin sound is not interrupted, i.e. the audible indicator may be stopped, and the visual indicator and/ or the haptic indicator may be used. In another example, if the target comprises a magic show, it may be more important to see the magic show than to hear the background sound of the magic show. Therefore, the indicator mode will be selected such that visualizing the magic show is not interrupted, i.e. the visual indicator may be stopped, and the audible indicator and/or the haptic indicator may be used.

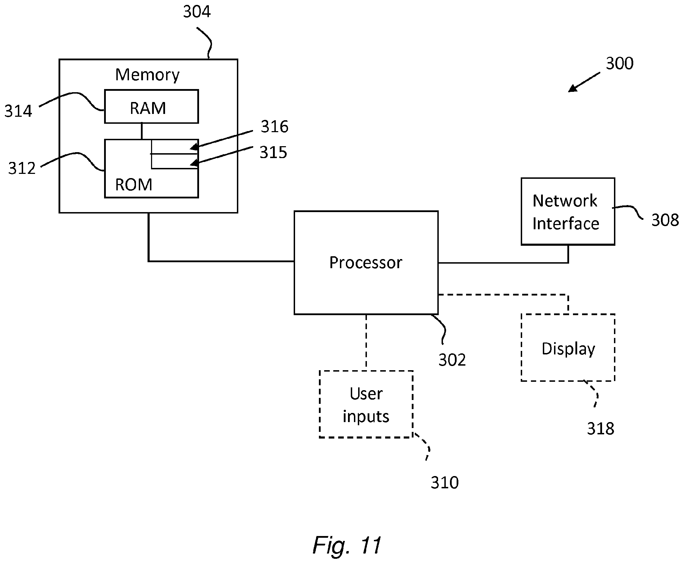

For completeness, FIG. 11 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The display 318 may, for example, form part of the headset 20 described above. Moreover, sensors of the headset may provide some or all of the user inputs 310. The processing system 300 may comprise one or more network/apparatus interfaces 308 for connection to a network/apparatus, e.g. a modem which maybe wired or wireless. The interface 308 may also operate as a connection to other apparatus such as device/apparatus which is not network side apparatus. Thus, direct connection between devices/ apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 40 and 110 described above. Note that in the case of small device/ apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/ apparatus such as IoT device/ apparatus i.e. embedded to very small size

In some example embodiments, the processing system 300 may also be associated with external software applications. These may be applications stored on a remote server device/ apparatus and may run partly or exclusively on the remote server device/apparatus. These applications maybe termed cloud-hosted applications. The processing system 300 may be in communication with the remote server device/apparatus in order to utilize the software application stored there.

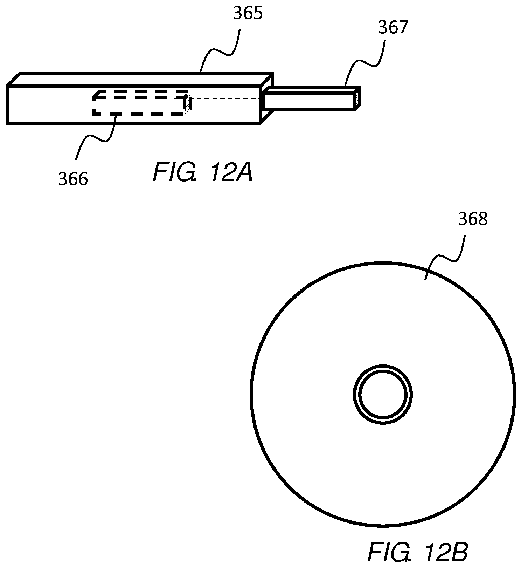

FIGs. 12A and 12B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. The CD 368 may be a CD-ROM or a DVD or similar. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/ apparatus and other devices/ apparatus. References to computer program, instructions, code etc. should be understood to express software for a programmable processor firmware such as the programmable content of a hardware device/ apparatus as instructions for a processor or configured or configuration settings for a fixed function device/ apparatus, gate array, programmable logic device/ apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 4 and 10 are examples only and that various operations depicted therein maybe omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for determining a target in a virtual scene;
means for determining a user context with respect to the target;
means for selecting one or more indicator modes of a user guidance based on at least the target and the user context; and
means for guiding the user towards the target using the selected one or more indicator modes of the user guidance.

2. An apparatus as claimed in claim 1, wherein the means for selecting the one or more indicator modes selects said modes, at least in part, to cause minimum interference to the user's interaction with the target.

3. An apparatus as claimed in claim 1 or claim 2, further comprising means for determining a variable related to the nature of the target, wherein the selection of the one or more indicator modes is further based on said variable.

4. An apparatus as claimed in any one of claims 1 to 3, wherein the user context comprises information regarding at least one of:
the user's current position in the scene;
whether or the extent to which the target is within the user's visual range; or
whether or the extent to which the target is within the user's audible range.

5. An apparatus as claimed in any one of the preceding claims, wherein the target comprises at least one of: one or more associated audible objects or one or more visual objects.

6. An apparatus as claimed in claim 5, wherein the target is within the user's visual range when the user is able to see at least one of the one or more associated visual objects.

7. An apparatus as claimed in claim 5 or claim 6, wherein the target is within the user's audible range when the user is able to hear at least one of the one or more associated audible objects.

8. An apparatus as claimed in any one of the preceding claims, wherein the one or more indicator modes comprise at least one of: an audio indicator; a visual indicator; or a haptic indicator.

9. An apparatus as claimed in claim 8, wherein the apparatus further comprises means for stopping use of the audio indicator for user guidance when the target is within the user's audible range.

10. An apparatus as claimed in claim 8 or claim 9, wherein the apparatus further comprises means for stopping use of the visual indicator for user guidance when the target is within the user's visual range.

11. An apparatus as claimed in any one of claims 8 to 10, wherein the apparatus further comprises means for starting use of the haptic indicator for user guidance when the use of the audio indicator and/or the use of the visual indicator is stopped.

12. An apparatus as claimed in any one of the preceding claims, wherein the apparatus further comprises means for synchronizing pulses or pulse rates of indicator modes when transitioning from one indicator mode to another indicator mode.

13. An apparatus as claimed in any one of the preceding claims, wherein the scene is an extended reality, virtual reality, augmented reality or mixed reality scene.

14. A method comprising:
determining a target in a virtual scene;
determining a user context with respect to the target;
selecting one or more indicator modes of a user guidance based on at least the target and the user context; and
guiding the user towards the target using the selected one or more indicators of the user guidance.

15. A computer program comprising instructions for causing an apparatus to perform at least the following:
determining a target in a virtual scene;
determining a user context with respect to the target;
selecting one or more indicator modes of a user guidance based on at least the target and the user context; and
guiding the user towards the target using the selected one or more indicators of the user guidance.
